# EUROPEAN PATENT APPLICATION

(11) **EP 4 442 651 A1**
(43) Date of publication of application: **09.10.2024**
(21) Application number: 23889853.0
(22) Date of filing: 04.10.2023
(51) Int. Cl.: C02F 1/44, C02F 1/00

(54) **CIRCLE-SEQUENCE REVERSE OSMOSIS DEIONIZATION DEVICE**

(30) Priority: 16.02.2023 KR 20230020875
(71) Applicant: SK Ecoplant Co., Ltd., Seoul 03143 (KR)
(72) Inventor: KANG, Wee Kwan, 5003-701, Gyeonggi-do (KR); LEE, Young Geun, 104-1301, Gyeonggi-do (KR); LEE, Woo Nyoung, 103-402, Gyeonggi-do (KR)
(74) Representative: Isarpatent
(86) International application number: PCT/KR2023/015184
(87) International publication number: WO 2024/172237

(57) **Abstract**

Disclosed is a circle-sequence reverse osmosis deionization apparatus which basically guarantees a high recovery rate by adopting closed-circuit reverse osmosis technology, reduces fouling by sequentially applying backward reverse osmosis technology, and performs highly efficient water treatment without a separate energy recovery device.

## Description

### BACKGROUND OF THE INVENTION

### Field of the Invention

The present invention relates to a circle-sequence reverse osmosis deionization apparatus, and more particularly, to a circle-sequence reverse osmosis deionization apparatus which basically guarantees a high recovery rate by adopting closed-circuit reverse osmosis technology, reduces fouling by sequentially switching the supply direction of feed water to forward and reverse directions, and performs highly efficient water treatment without a separate energy recovery device.

### Description of the Related Art

Water shortages mean that obtaining available fresh water sources is difficult due to resource depletion, and water shortages are worsening worldwide due to industrial advancement and abnormal climate phenomena.

However, water is essential element in human life and various industrial fields, and its demand continues to increase, and a so-called seawater desalination method, which desalinates a large amount of seawater, has been proposed as an effective method to meet this demand.

Seawater desalination refers to a series of water treatment processes which remove dissolved ions, including salts, from seawater that is difficult to use directly as domestic or industrial water to obtain high purity drinking water, domestic water, and industrial water.

Current seawater desalination equipment employs a multistage flash distillation process (MSF) or a reverse osmosis process, and thereamong, the reverse osmosis process is a process of producing fresh water by applying pressure, which is equal to or higher than osmotic pressure, to raw water or salt water to move pure water without solutes, such as ions or organic molecules, through a semi-permeable membrane.

Meanwhile, unlike the general reverse osmosis process, to achieve a target recovery rate, there is a closed-circuit reverse osmosis (CCRO) seawater desalination method in which brine discharged from reverse osmosis equipment is mixed with raw water or salt water and reinjected into the reverse osmosis equipment, and when the concentration of the brine reaches a target concentration, the brine is discharged.

In this regard, Korean Patent Registration No. 10-1052662 discloses a feature in which a plurality of closed-circuit reverse osmosis (CCRO) modules is connected in parallel as an apparatus for continuous batch sequential desalination in the closed circuit of a saltwater solution by reverse osmosis.

However, the existing closed-circuit reverse osmosis desalination apparatus has a problem in that, since a time for which the pressure of brine discharged through the reverse osmosis equipment increases is shortened as the process progresses, the cleaning or replacement cycle of the reverse osmosis equipment is shortened.

### RELATED ART DOCUMENT

### PATENT DOCUMENT

Korean Patent Registration No. 10-1052662 (July 22, 2011)

### SUMMARY OF THE INVENTION

Therefore, the present invention has been made in view of the above problems, and it is an object of the present invention to provide a circle-sequence reverse osmosis deionization apparatus which basically guarantees a high recovery rate by adopting closed-circuit reverse osmosis technology, reduces fouling by sequentially switching the supply direction of feed water to forward and reverse directions, and performs highly efficient water treatment without a separate energy recovery device.

Other objects of the present invention will become apparent through embodiments described below.

In accordance with the present invention, the above and other objects can be accomplished by the provision of a circle-sequence reverse osmosis deionization apparatus configured such that each of a plurality of forward reverse osmosis (RO) modules and at least one backward RO module are connected in parallel, wherein brine discharged from the plurality of forward RO modules is fed into the at least one backward RO module, and the brine discharged from the at least one backward RO module is mixed with feed water and fed into each of the plurality of forward RO modules.

The circle-sequence reverse osmosis deionization apparatus may include a feed pump configured to supply the raw water, a first pump connected to an output terminal of the feed pump, a second pump connected to output terminals of the plurality of forward RO modules, a third pump connected to an output terminal of the first pump, and a controller configured to control the feed pump and the first pump to feed the raw water into the plurality of forward RO modules, in a first step of operation of the circle-sequence reverse osmosis deionization apparatus, and configured to control the second pump to feed the brine discharged from the plurality of forward RO modules into the at least one backward RO module, in a second step of the operation of the circle-sequence reverse osmosis deionization apparatus, and the third pump may be operated without separate control when the brine discharged from the at least one backward RO module joins the raw water and is then fed into the plurality of forward RO modules, in a third step of the operation of the circle-sequence reverse osmosis deionization apparatus.

The first pump and the second pump may be high pressure pumps, and the third pump may be a jet pump configured to accelerate the raw water using a flow of the brine in the third step. In a modified embodiment, the second pump may be booster pump.

Automatic 3-way valves may be disposed at input terminals and output terminals of the plurality of forward RO modules and the at least one backward RO module, respectively, and the controller may control the automatic 3-way valves so that the at least one backward RO module is converted into a forward RO module when a predetermined first condition is satisfied, and may continuously supply the raw water to the input terminals of all the RO modules and discharges the brine from the output terminals of all the RO modules to outside until a predetermined second condition is satisfied, in a fourth step of the operation of the circle-sequence reverse osmosis deionization apparatus.

The first condition may be that a measured value from at least one of a concentration sensor, a flow sensor, and a pressure sensor disposed on a movement path of the brine reaches a predetermined reference, or that a predetermined time has elapsed after the third step.

The second condition may be that a concentration of the brine reaches a predetermined initial concentration.

The controller may execute a fifth step of the operation of the circle-sequence reverse osmosis deionization apparatus, configured to control the automatic 3-way valves to convert at least one of the plurality of forward RO modules into a backward RO module and to convert the at least one existing backward RO module into a forward RO module, after completing one batch process from the first step to the fourth step.

Otherwise, the controller may execute the fifth step, after performing the batch process plural times.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic diagram of a circle-sequence reverse osmosis deionization apparatus according to one embodiment of the present invention;
FIG. 2 is a block diagram showing the configuration of the circle-sequence reverse osmosis deionization apparatus according to one embodiment of the present invention;
FIG. 3 is a flowchart showing steps of operation of the circle-sequence reverse osmosis deionization apparatus according to one embodiment of the present invention;
FIG. 4 is a schematic view showing a fourth step of the operation of the circle-sequence reverse osmosis deionization apparatus according to one embodiment of the present invention;
FIG. 5 is a schematic view showing a fifth step of the operation of the circle-sequence reverse osmosis deionization apparatus according to one embodiment of the present invention; and
FIG. 6 is a graph illustrating a decrease in a time for which pressure increases whenever one batch process from a first step to the fourth step of the operation of the circle-sequence reverse osmosis deionization apparatus according to one embodiment of the present invention is repeated.

### DETAILED DESCRIPTION OF THE INVENTION

Hereinafter, reference will be made in detail to exemplary embodiments of the present invention, examples of which are illustrated in the accompanying drawings. However, it will be understood that the embodiments of the present invention are provided only to completely disclose the invention and cover transformations, equivalents or substitutions which come within the scope and technical range of the invention.

In the following description of the present invention, a detailed description of known functions and configurations incorporated herein will be omitted when it may make the subject matter of the present disclosure rather unclear.

The terminology used herein is for the purpose of describing particular example embodiments only and is not intended to be limiting. Singular expressions may encompass plural expressions, unless they have clearly different contextual meanings. In the following description of the present invention, terms, such as "including", "comprising" and "having", are to be interpreted as indicating the presence of characteristics, numbers, steps, operations, elements or parts stated in the description or combinations thereof, and do not exclude the presence of one or more other characteristics, numbers, steps, operations, elements, part, or combinations thereof, or possibility of adding the same.

All terms used herein, including technical or scientific terms, have the same meanings as generally understood by those skilled in the art to which the present invention pertains, unless otherwise defined. Terms defined in commonly used dictionaries should be interpreted as having meanings consistent with meanings in the context of the related technology, and should not be interpreted as having ideal or excessively formal meanings unless explicitly defined in the present invention.

A term "module" used herein refers to one unit which processes a specific function or operation, and may mean hardware, software, or a combination of hardware and software.

In addition, terms such as "first" and "second" are used only to describe various elements, and these elements should not be construed as being limited by these terms. These terms are used only to distinguish one element from other elements.

Hereinafter, embodiments according to the present invention will be described in detail with reference to the accompanying drawings. In the following description with reference to the accompanying drawings, identical or corresponding elements are denoted by the same reference numerals even though they are depicted in different drawings, and the redundant description thereof will be omitted.

Hereinafter, a circle-sequence reverse osmosis deionization apparatus 1 according to one embodiment of the present invention will be described in detail with reference to the accompanying drawings.

In the following description of the circle-sequence reverse osmosis deionization apparatus 1 according to one embodiment of the present invention, the meaning of "connected" should be interpreted as being directly connected to a reverse osmosis module or connected thereto via an element, such as a pump, a valve, a controller, or the like.

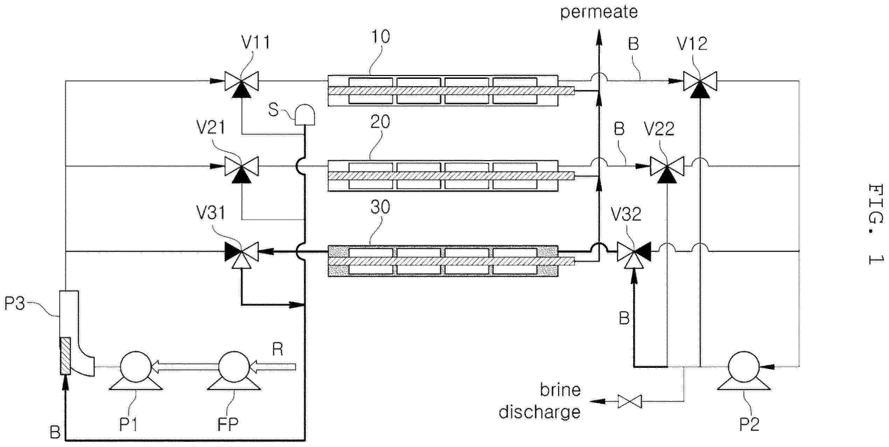

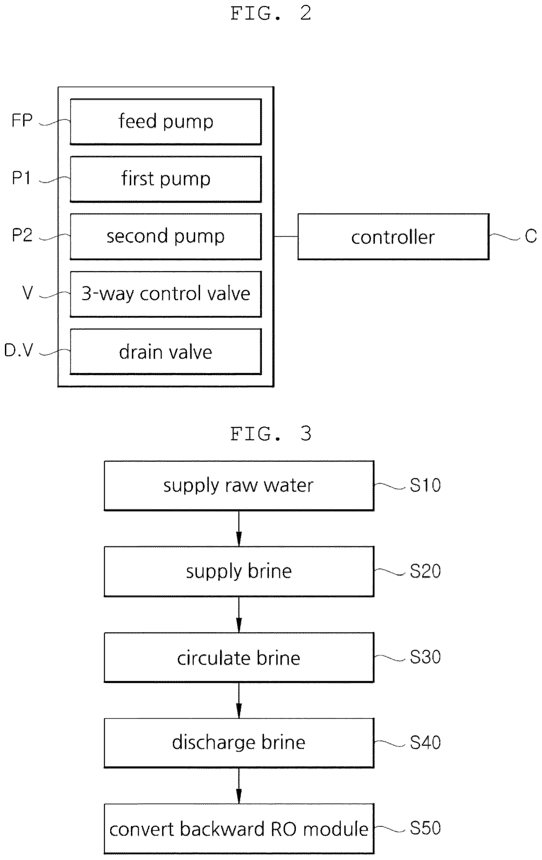

FIG. 1 is a schematic diagram of the circle-sequence reverse osmosis deionization apparatus according to one embodiment of the present invention, FIG. 2 is a block diagram showing the configuration of the circle-sequence reverse osmosis deionization apparatus according to one embodiment of the present invention, and FIG. 3 is a flowchart showing steps of operation of the circle-sequence reverse osmosis deionization apparatus according to one embodiment of the present invention.

As shown in FIGs. 1 and 2, the circle-sequence reverse osmosis deionization apparatus 1 according to one embodiment of the present invention includes a plurality of reverse osmosis (RO) modules 10, 20 and 30, a feed pump FP, a first pump P1, a second pump P2, a third pump P3, a plurality of automatic 3-way valves V, a drain valve D.V, and a controller C.

The RO modules 10, 20, and 30 include a plurality of forward RO modules 10 and 20, and at least one backward RO module 30.

Although, in this specification, an embodiment including two forward RO modules and one backward RO module is illustrated, the present invention is not limited thereto, and two backward RO modules or four or more backward RO modules may be provided depending on the capacity of brine to be treated. As a specific example, one forward RO module and one backward RO module may be provided, three forward RO modules and one backward RO module may be provided, or three forward RO modules and two backward RO modules may be provided.

Hereinafter, for convenience of explanation, the RO modules 10, 20, and 30 are respectively referred to as a first RO module 10, a second RO module 20, and a third RO module 30, which are distinguished from one another.

The first RO module 10, the second RO module 20, and the third RO module 30 are connected in parallel to one another, and form a circulation-type circuit in which brine B discharged from the first RO module 10 and the second RO module 20 is fed into the third RO module 30 and the brine B discharged from the third RO module 30 is again fed into each of the first RO module 10 and the second RO module 20.

The feed pump FP is installed to supply raw water R to the RO modules 10, 20, and 30, and for example, may transfer the raw water R at a pressure of about 3 bar(g).

The first pump P1 is connected to the output terminal of the feed pump FP, and operation of the first pump P1 is initiated when the flow rate of the raw water R supplied from the feed pump FP exceeds a predetermined reference.

The second pump P2 is connected to the output terminals of the first RO module 10 and the second RO module 20, and moves the brine discharged from the first RO module 10 and the second RO module 20 to the input terminal of the third RO module 30.

A high pressure pump may be used as the first pump P1 and the second pump P2. In a modified embodiment, the second pump P2 may be a booster pump.

The brine B discharged from the third RO module 30 joins the raw water R supplied through the feed pump FP and is fed into the third pump P3. The third pump P3 transfers the joined water to the input terminals of the first RO module 10 and the second RO module 20.

A jet pump, which operates based on the principle of accelerating the flow of the raw water R using the flow of the brine B, may be used as the third pump P3.

That is to say, since the pressure of the brine B is higher than the pressure of the raw water R, a pressure drop must be applied to cause the raw water R and the brine B to be smoothly joined and transferred, but in this case, that much energy loss must be borne. Therefore, through the jet pump used as the third pump P3, the raw water R may be accelerated using the flow of the brine B without a separate pressure drop.

The automatic 3-way valves V11, V12, V21, V22, V31, and V32 (collectively referred to as "V") are disposed at the input terminals and the output terminals of the first RO module 10, the second RO module 20, and the third RO module 30, respectively, and are opened and closed in a horizontal flow direction or a vertical flow direction under the control of the controller C.

The drain valve D.V is disposed on a pipe where the output terminals of the first RO module 10, the second RO module 20, and the third RO module 30 join, and is opened and closed under the control of the controller C when the brine B satisfies a designated condition.

The controller C controls the startup and operation levels of the respective pumps FP, P1, and P2 in each of steps S10 to S50, which will be described later, and controls opening and closing of the automatic 3-way valves V and the drain valve D.V.

The steps of the operation of the circle-sequence reverse osmosis deionization apparatus 1 controlled by the controller C include a first step of supplying raw water R (S10), a second step of supplying brine B (S20), a third step of circulating the brine B (S30), a fourth step of discharging the brine B (S40), and a fifth step of changing the operating directions of the respective RO modules 10, 20, and 30 (S50) .

Here, each step will be described in detail assuming that the first RO module 10 and the second RO module 20 are set to operate in a forward direction, and the third RO module 30 is set to operate in a backward direction.

In the first step (S10), the controller C controls the automatic 3-way valves V11, V12, V21, and V22 disposed at the input and output terminals of the first RO module 10 and the second RO module 20 to be opened in the horizontal flow direction, and controls the automatic 3-way valves V31 and V32 disposed at the input and output terminals of the third RO module 30 to be opened in the vertical flow direction.

In addition, in the first step (S10), the controller C operates the feed pump FP and the first pump P1 so that the raw water R is fed into the first RO module 10 and the second RO module 20. Specifically, the controller C operates the feed pump FP to supply the raw water R, and initiates operation of the first pump P1, when the flow rate of the raw water R supplied from the feed pump FP exceeds the predetermined reference. Here, the controller C controls the operating frequency (Hz) of the first pump P1 based on a signal from a flow sensor (not shown) disposed on a supply line of the raw water R.

In the second step (S20), the controller C controls the second pump P2 so that the brine B discharged from the first RO module 10 and the second RO module 20 is fed into the third RO module 30. Specifically, the controller C initiates operation of the second pump P2 when the flow rate of the brine B exceeds a predetermined reference, and in this case, controls the operating frequency (Hz) of the second pump P2 based on a signal from a flow sensor (not shown) disposed on a supply line of the brine B. Meanwhile, fresh water obtained by filtering (permeation) while passing through the first RO module 10 and the second RO module 20 is discharged through a pipe.

In the third step (S30), the brine B discharged from the third RO module 30 is fed into the third pump P3 via the automatic 3-way valve V31 disposed at the output terminal of the third RO module 30. Further, the raw water R supplied by the feed pump FP and the first pump P1 is also fed into the third pump P3, and joins the discharged brine B fed into the third pump P3. Meanwhile, fresh water obtained through filtering (permeation) while passing through the third RO module 30 is also discharged through the pipe.

The above-described first step (S10) to third step (S30) are repeatedly performed until a designated sensor S detects that any one of the concentration, pressure, flow rate, and scale amount of the brine B exceeds a predetermined limit. Therefore, the designated sensor S may be any one of a concentration sensor, a flow sensor, a pressure sensor, and a scale sensor, and at least one thereof is disposed on a movement path of the brine B.

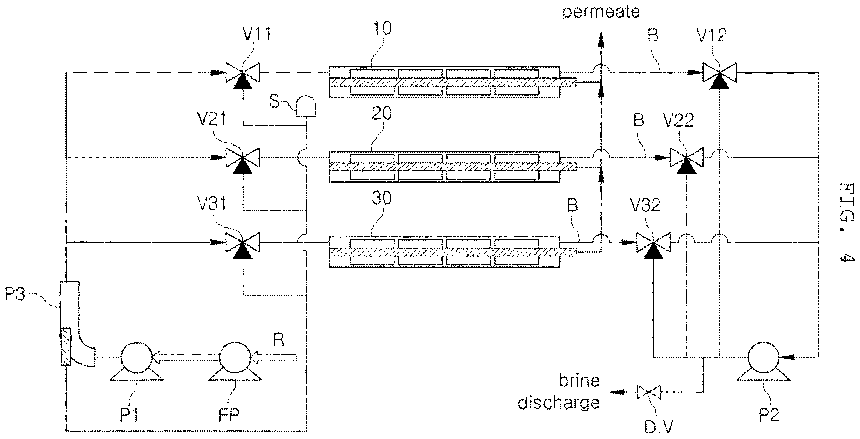

The fourth step (S40) is executed when any one of the concentration, pressure, flow rate, and scale amount of the brine B exceeds the predetermined limit. FIG. 4 is a schematic view showing the fourth step of the operation of the circle-sequence reverse osmosis deionization apparatus according to one embodiment of the present invention.

In the fourth step (S40), the controller C controls the automatic 3-way valves V31 and V32 so that the third RO module 30 is converted into a forward RO module when a predetermined first condition is satisfied, and continuously supplies the raw water R to the input terminals of all the RO modules 10, 20, and 30 and discharges the brine B from the output terminals of all the RO modules 10, 20, and 30 to the outside until a predetermined second condition is satisfied.

Specifically, when a measured value from the sensor S reaches the predetermined limit, the controller C opens all the automatic 3-way valves V11 to V32 disposed at the input and output terminals of all the RO modules 10, 20, and 30 in the horizontal flow direction, and opens the closed drain valve D.V. At this time, operation of the second pump P2 may be stopped, or the second pump P2 may operate at the minimum frequency (Hz) or operate in the reverse direction.

In the fourth step (S40), the first condition is that the measured value from the sensor S disposed on the movement path of the brine B reaches a predetermined reference (for example, the limit of at least one of concentration, salinity, flow rate, pressure, and scale amount), or that a predetermined time has elapsed after the third step (S30).

In addition, in the fourth step (S40), the second condition means that the concentration of the brine B reaches a predetermined initial concentration.

The drain valve D.V is in a closed state in the first step (S10) to the third step (S30), is opened to discharge the brine B when the first condition is satisfied in the fourth step (S40), and is converted again into the closed state when the second condition is satisfied.

The first step (S10) to the fourth step (S40) described above may be defined as one batch process, and will be abbreviated as "one batch" below.

In the circle-sequence reverse osmosis deionization apparatus 1 according to one embodiment of the present invention, the operating directions of the RO modules 10, 20, and 30 are reset whenever one batch is completed.

For example, if the first RO module 10, the second RO module 20, and the third RO module 30 are operated in the forward, forward, and backward directions, respectively in the first batch, the first RO module 10, the second RO module 20, and the third RO module 30 may be operated in the forward, backward, and forward directions, respectively in the second batch, the first RO module 10, the second RO module 20, and the third RO module 30 may be operated in the backward, forward, and forward directions, respectively in the third batch, and the first RO module 10, the second RO module 20, and the third RO module 30 may be operated in the forward, forward, and backward directions, respectively in the fourth batch.

However, this is only an example, the numbers of RO modules operated in the forward and backward directions may vary depending on the number of RO modules, and the order of resetting of the operating directions of the RO modules may also be variously modified.

That is, the controller C may determine a target to be operated in the backward direction based on the values measured by the sensor S for the respective RO modules 10, 20, and 30, and may determine the operating directions of the respective RO modules 10, 20, and 30 depending on a result of the determination.

For example, if it is determined the pressure of the brine B for a specific RO module is high due to an unexpected reason as a result of detection of the pressures of the brine B for the respective RO modules, it is necessary to intentionally remove fouling or scale from the specific RO module by operating the specific RO module in the backward direction, and therefore, even though it is timing to operate other RO module in the backward direction depending on a predetermined schedule, the controller C may change the schedule so as to operate the specific RO module in the backward direction

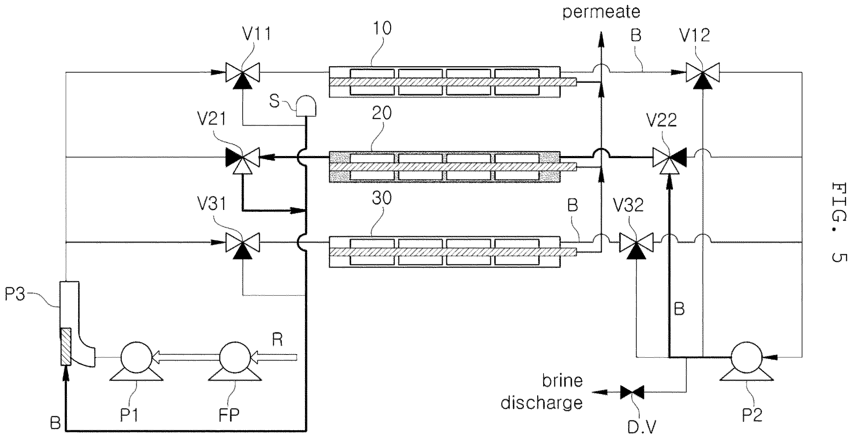

The fifth step S50 is a process of resetting the operating directions of the RO modules after completing one batch from the first step S10 to the fourth step S40, and FIG. 5 is a schematic view showing the fifth step of the operation of the circle-sequence reverse osmosis deionization apparatus according to one embodiment of the present invention.

In the fifth step S50, the controller C controls related automatic 3-way valves, i.e., at least four of the automatic 3-way valves V11 to V32, so that one of the first RO module 10 and the second RO module 20, which were operated in the forward direction, is converted to a backward RO module, and the third RO module 30 operated in the backward direction is converted to a forward RO module.

When raw water R is fed into an RO module, the concentration of the raw water R increases toward the rear end of the RO module, and thus, the probability of generating scale increases, and the overall flux decreases and performance is deteriorated as scale increases. Therefore, by periodically reversing the injection direction of the raw water R, some of the scale may be removed by the injection pressure of the raw water R, while reducing bio-fouling and a scale generation rate within the RO module.

Further, the controller C may execute the fifth step S50 immediately after one batch has been completed, or may execute the fifth step S50 only when a predetermined condition is satisfied after repeating one batch plural times.

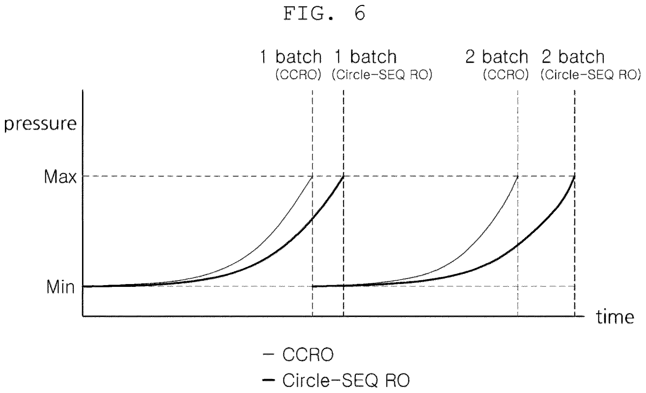

FIG. 6 is a graph illustrating a decrease in a time for which pressure increases whenever one batch process from the first step to the fourth step of the operation of the circle-sequence reverse osmosis deionization apparatus according to one embodiment of the present invention is repeated.

Referring to FIG. 6, in a general circuit reverse osmosis (CCRO) desalination apparatus, the time for which the pressure of brine B discharged while continuously circulating RO modules through one batch process increases is shortened as the batch process is repeated. However, in the present invention, brine B discharged from the forward RO modules is fed into the backward RO module before the closed-circuit reverse osmosis (CCRO) process in which the brine B is mixed with raw water R, and the injection direction of the raw water R is periodically reversed to reduce bio-fouling and the scale generation rate within the RO modules and to remove some of scale, and thereby, a decrease in the time for which the pressure of the brine B increases is shortened, and thus a clean in place (CIP) cycle is increased.

As is apparent from the above description, according to one embodiment of the present invention, brine discharged from forward RO modules is fed into a backward RO module before the closed-circuit reverse osmosis (CCRO) process of mixing the brine with raw water, and is circulated once more in a concentrated state, thereby being capable of significantly reducing energy consumption and the amount of chemicals used, compared to the existing multistage reverse osmosis process.

In addition, according to one embodiment of the present invention, the injection direction of the raw water is periodically reversed to reduce bio-fouling and a scale generation rate within the RO modules and to remove some of the scale, and thereby, a decrease in a time for which the pressure of the brine increases is shortened, and thus a clean in place (CIP) cycle may be increased.

The effects of the present invention are not limited to those mentioned above, and other effects not mentioned will be clearly understood by those skilled in the art from the above description.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A circle-sequence reverse osmosis deionization apparatus configured such that each of a plurality of forward reverse osmosis (RO) modules and at least one backward RO module are connected in parallel, wherein brine discharged from the plurality of forward RO modules is fed into the at least one backward RO module, and the brine discharged from the at least one backward RO module is fed into each of the plurality of forward RO modules.

2. The circle-sequence reverse osmosis deionization apparatus according to claim 1, comprising:
a feed pump configured to supply the raw water;
a first pump connected to an output terminal of the feed pump;
a second pump connected to output terminals of the plurality of forward RO modules;
a third pump connected to an output terminal of the first pump; and
a controller configured to control the feed pump and the first pump to feed the raw water into the plurality of forward RO modules, in a first step of operation of the circle-sequence reverse osmosis deionization apparatus, and configured to control the second pump to feed the brine discharged from the plurality of forward RO modules into the at least one backward RO module, in a second step of the operation of the circle-sequence reverse osmosis deionization apparatus,
wherein the third pump is operated without separate control when the brine discharged from the at least one backward RO module joins the raw water and is then fed into the plurality of forward RO modules, in a third step of the operation of the circle-sequence reverse osmosis deionization apparatus.

3. The circle-sequence reverse osmosis deionization apparatus according to claim 2, wherein the first pump and the second pump are high pressure pumps, and the third pump is a jet pump configured to accelerate the raw water using a flow of the brine in the third step.

4. The circle-sequence reverse osmosis deionization apparatus according to claim 3, wherein:
automatic 3-way valves are disposed at input terminals and output terminals of the plurality of forward RO modules and the at least one backward RO module, respectively; and
the controller controls the automatic 3-way valves so that the at least one backward RO module is converted into a forward RO module when a predetermined first condition is satisfied, and continuously supplies the raw water to the input terminals of all the RO modules and discharges the brine from the output terminals of all the RO modules to outside until a predetermined second condition is satisfied, in a fourth step of the operation of the circle-sequence reverse osmosis deionization apparatus.

5. The circle-sequence reverse osmosis deionization apparatus according to claim 4, wherein the first condition is that a measured value from at least one of a concentration sensor, a flow sensor, and a pressure sensor disposed on a movement path of the brine reaches a predetermined reference, or that a predetermined time has elapsed after the third step.

6. The circle-sequence reverse osmosis deionization apparatus according to claim 5, wherein the second condition is that a concentration of the brine reaches a predetermined initial concentration.

7. The circle-sequence reverse osmosis deionization apparatus according to claim 5, wherein the controller executes a fifth step of the operation of the circle-sequence reverse osmosis deionization apparatus, configured to control the automatic 3-way valves to convert at least one of the plurality of forward RO modules into a backward RO module and to convert the at least one existing backward RO module into a forward RO module, after completing one batch process from the first step to the fourth step.

8. The circle-sequence reverse osmosis deionization apparatus according to claim 7, wherein the controller executes the fifth step, after performing the batch process plural times.
